# EUROPÄISCHE PATENTANMELDUNG

(11) **EP 1 988 300 A2**
(43) Veröffentlichungstag der Anmeldung: **05.11.2008**
(21) Anmeldenummer: 08290378.2
(22) Anmeldetag: 17.04.2008
(51) Int. Cl.: F16B 37/04

(54) **Vorrichtung zur Befestigung von Bauteilen aneinander mit Hilfe einer auf ein Bauteil aufschiebbaren Klemme**

(30) Priorität: 27.04.2007 DE 202007006097 U
(71) Anmelder: Lisi Automotive Rapid, 95650 Puiseux Pontoise (FR)
(72) Erfinder: Benkel, Matthias, 82256 Fürstenfeldbruck (DE); Demel, Otto, 69123 Heidelberg (DE); Schaaf, Stefan, 67435 Geinsheim (DE); Senftleber, Markus, 68775 Ketsch (DE); Pham, Quyet, 80993 Münich (DE)
(74) Vertreter: Berger, Helmut

(57) **Zusammenfassung**

Die Erfindung betrifft eine Vorrichtung zur Befestigung von Bauteilen wie Blechen aneinander, die eine Klemme (5) mit äusseren elastischen U-förmigen Zungen (10) zum Aufschieben auf einem Randbereich (6) eines Bauteils (2) und einem zwischen den Zungen sich befindenden mit einem Gewinde (7) versehenen Teil (17), und eine in dieses Gewinde (7) einschraubbare Schraube (8) besitzt, die zur Befestigung des zweiten Bauteils (3) am ersten Bauteil (2) dient. Die Schraube (8) besitzt eine für Schrauben für Kunststoff geeignete große Steigung (5) und einen entsprechend kleinen Flankenwinkel (α), und das Gewinde (7) ist als aus dem mittleren Klemmenteil (17) ausgeschnittener und in Form einer Schnecke herausgezogener Bereich mit mehr als einem Gewindegang mit an die Steigung des Schraubengewindes angepaßter Steigung ausgebildet.

## Beschreibung

Die Erfindung betrifft eine Vorrichtung zur Befestigung von Bauteilen wie Blechen aneinander, die eine aus einem Abschnitt eines bandförmigen Materials wie Blech gefertigte Klemme mit äusseren elastischen U-förmigen. Zungen zum Überschieben über den Randbereich eines Bauteils und einem zwischen den Zungen sich befindenden, mit einem Gewinde versehenen Bereich, und eine in dieses Gewinde einschraubbare Schraube besitzt, die zur Befestigung des zweiten Bauteils am ersten Bauteil dient.

Die bekannten Vorrichtungen dieser Art besitzen den Mangel, daß sie nur für Schrauben geeignet sind, die typisch für Blechgewinde und metrische Gewinde sind. Es hat sich jedoch für wünschenswert erwiesen, Schrauben für Befestigungsklammern der vorgenannten Art verwenden zu können, die für Kunststoff geeignet sind und selbsttätig das Gewinde in dieses formen können.

Der vorliegenden Erfindung liegt daher die Aufgabe zugrunde, eine Befestigungsvorrichtung der vorgenannten Art zu schaffen, dessen Klemme zwar aus Blech besteht, jedoch auch für Kunstoff bestimmte Schrauben geeignet ist.

Zur Lösung dieser Aufgabe ist die erfindungsgemässe Vorrichtung dadurch gekennzeichnet, daß die Schraube eine für Kunststoff geeignete grosse Steigung und einen kleinen Flankenwinkel besitzt, und daß das Gewinde als aus dem mittleren Klemmenteil ausgeschnittener und in Form einer Schnecke herausgezogener Bereich mit mehr als einem Gewindegang mit an die Steigung des Schraubengewindes angepaßter Steigung gebildet ist.

Weitere vorteilhafte Merkmale der Erfindung sind Gegenstände von abhängigen Patentansprüchen.

Im folgenden wird die erfindungsgemässe Vorrichtung unter Bezugnahme auf beigefügte Abbildungen näher beschrieben.

Die Figur 1 ist eine perspektivische Ansicht einer erfindungsgemässen Befestigungsvorrichtung.

Die Figur 2 ist eine Seitenansicht der Figur 1.

Die Figur 3 ist eine perspektivische Ansicht einer ersten Ausführungsform einer erfindungsgemässen Befestigungsklammer.

Die Figur 4 ist eine perspektivische Ansicht einer anderen Ausführungsform einer erfindungsgemässen Befestigungsklammer.

Die Figur 5 zeigt die Befestigungsklammer der Figur 4 in einer anderen Ansicht zusammen mit einer Befestigungsschraube.

Die Figur 6 ist eine perspektivische Ansicht einer anderen Ausführungsvariante der Klammer gemäß der Figur 4.

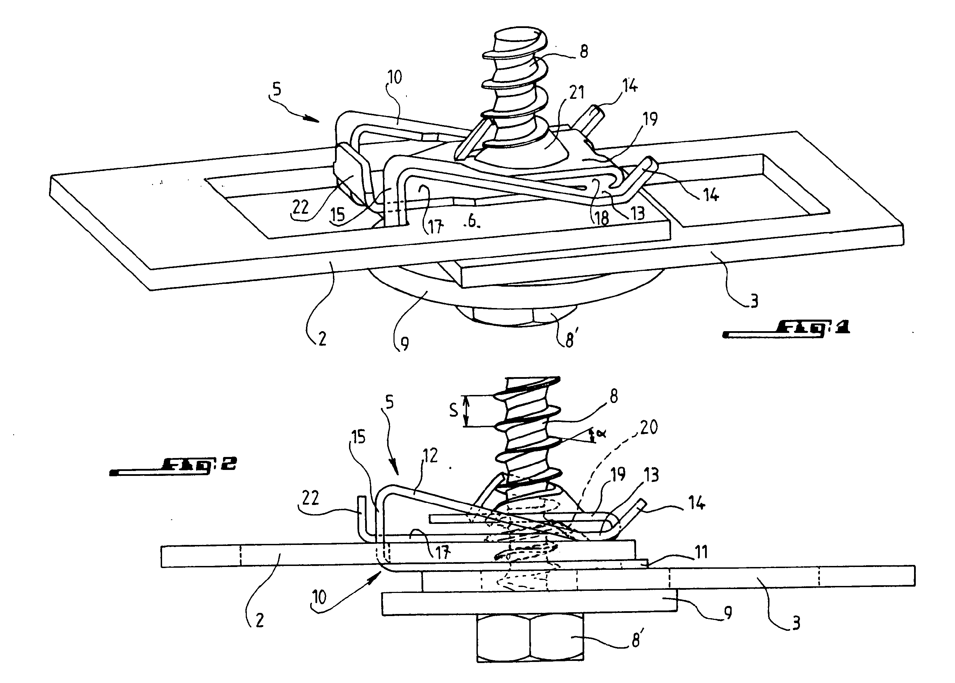

Die Figur 1 zeigt eine erfindungsgemässe Befestigungsvorrichtung in ihrer Arbeitsstellung zur Befestigung von zwei flächigen Bauteilen 2, 3 aneinander. Die Befestigungsvorrichtung 1 besitzt eine Klammer 5, die auf einen Randbereich 6 des Bauteils 2 aufgeschoben ist und ein Gewindeteil 7 aufweist, sowie eine Schraube 8, die in dieses Gewindeteil eingeschraubt ist und das zweite Bauteil 3 am ersten Bauteil 2 festhält mittels einer Unterlegsscheibe 9 zwischen dem Kopf 8' der Schraube und dem Teil 3.

Die Klammer 5 ist aus einem von einem Bandmaterial, insbesondere Blech, abgeschnittenen Abschnitt gefertigt. Die verschiedenen Bereiche der Klammer sind durch teilweises Auschneiden aus dem Bandmaterialabschnitt und anschließende entsprechende Biegeverformung hergestellt. Die Klammer 5 besitzt insbesondere an jedem ihrer in Richtung der Längsachse der Klammer gerichteten Aussenränder eine ausgeschnittene und in U-Form gebogene Klemmzunge 10, deren unterer Schenkel 11 zwischen den zwei Befestigungsteilen 2 und 3 in der Befestigungsstellung zu liegen kommt und deren oberer federnder Schenkel 12 mit seinem freien oberen Endteil 13 auf dem Bauteil 2 unter Preßdruck aufliegt. Das freie Ende 14 der Zungen ist nach oben umgebogen. Die Basis 15 der U-förmigen Klemmzungen 10 ist breiter als der vordere Anpreßbereich 13. Der mittlere Teil 17 der Klammer liegt flach auf der Oberfläche des eingeklemmten Bauteils 2 auf und steht durch einen stegförmigen verbleibenden Bereich 18 des ursprünglichen Bandmaterialabschnitt mit dem auf dem Teil 2 pressend aufliegenden Bereich 13 in Verbindung. Der mittlere Teil 17 ist nach vorne durch einen Teil 19 fortgesetzt, der jedoch unter Bildung eines U mit dem Teil 17 auf diesem zurückgebogen ist. In dem mittleren Bereich des zurückgebogenen Teils 19 ist das Gewinde 7 ausgebildet, das gemäß den Abbildungen 1 und 2 zwei Gewindegänge 20, 21 besitzt, wobei ein Gewindegang 20 im Klemmenteil 17 und der andere in dem über dieses zurückgebogenes Teil 19 ausgebildet ist. Diese Gewindegänge sind durch Ausschneiden und schneckenförmiges senkrecht nach aussen gerichtetes Herausziehen erstellt, wie dies deutlich aus den Abbildungen hervorgeht. Zur Vervollständigung der Beschreibung ist noch zu bemerken, daß das freie hintere Ende 22 des flachen Mittelteils 17 der Klammer nach oben abgebogen ist.

Das in Form einer Schnecke aus der Ebene der mittleren Klemmenteile 17 und 19 herausgezogene doppelgängige Gewinde 20, 21 besitzt eine verhältnismäßig große Steigung, die der Steigung der Schraube 8 entspricht, die zum selbsttätigen Einschneiden eines Gewindes in Kunstoffteile geeignet ist, mit einer großen Steigung S von z.B. 2,24 mm und einem kleinen Flankenwinkel α von z.B. 30°.

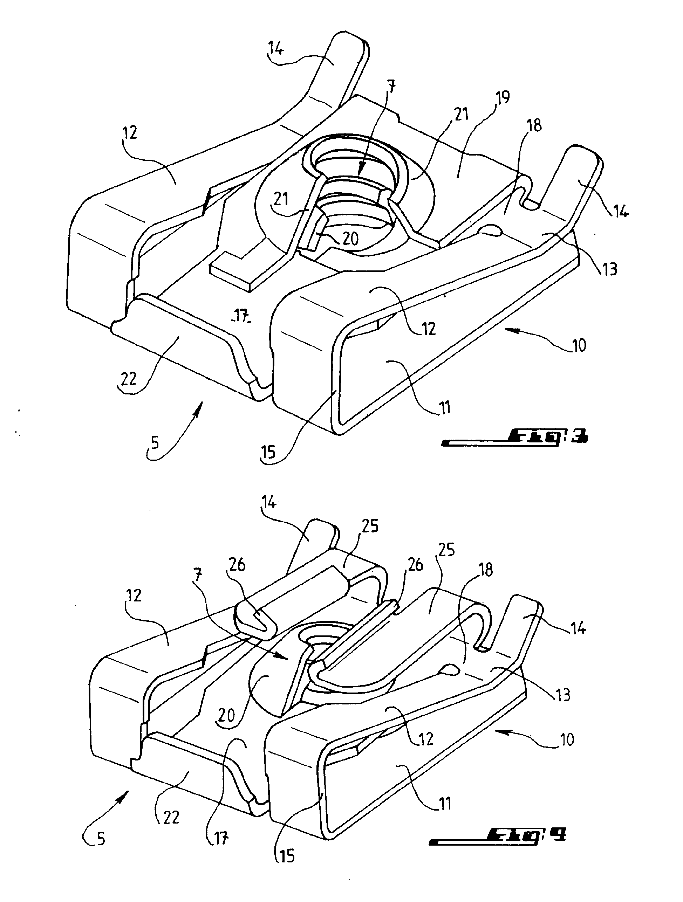

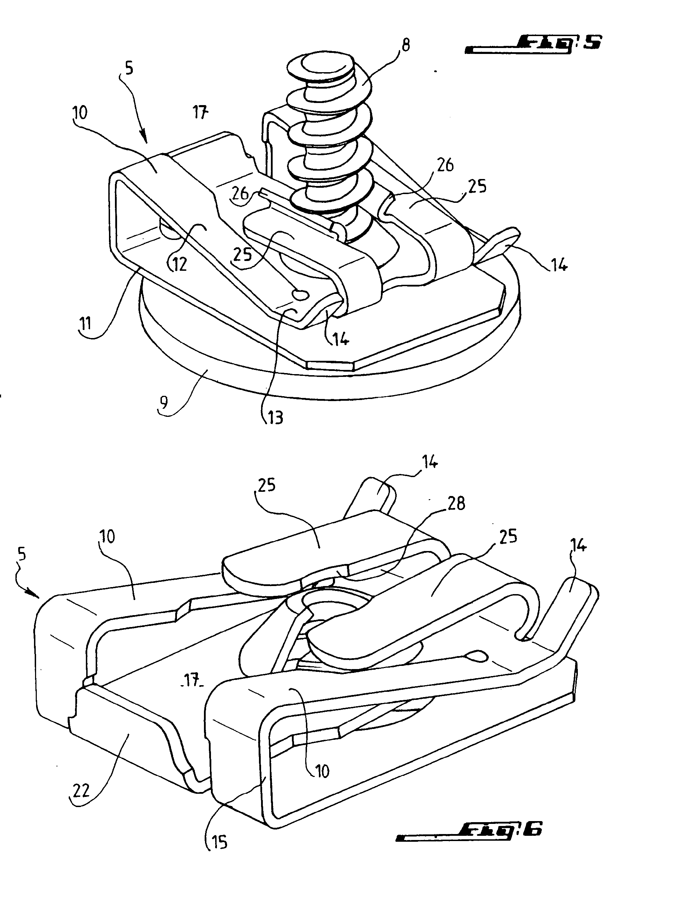

Die Figuren 4 und 5 zeigen eine zweite Ausführungsform, bei der nur ein Gewinde mit einem Gang in dem flach auf dem Bauteil 2 aufliegenden mittleren Bereich 17 der Klemme durch schneckenartiges Herausziehen ausgebildet ist und der zurückgebogene auf den Figuren 1 und 2 mit 19 bezeichnete Teil in Form von zwei parallelen seitlichen Zungen 25 gestaltet ist, deren innere in Längsrichtung ausgerichtete Kanten 26 nach oben in der Zone der Schraube abgebogen sind und in das zwischen ihnen liegende Schraubengewinde in der dargestellten Weise eingreifen. Die so in das Gewinde eingreifende Zungen wirken daher als zusätzliches Gewindegangteil und, da sie elastisch an die Gewindeflanken der Schraube angepreßt sind, wirken einem selbsttätigen Lösen der Schraube z.B. durch Materialsetzen oder Vibrationen entgegen, sowohl in axialer als auch in radialen Richtungen.

In der Ausführungsvariante gemäß der Figur 6 sind die in das Schraubengewinde eingreifenden seitlichen inneren Ränder mit einem kreisbogenförmigen Ausschritt 28 versehen, der dem Schraubendurchmesser angepaßt ist.

## Patentansprüche

1. Vorrichtung zur Befestigung von Bauteilen wie Blechen aneinander, die eine aus einem Abschnitt eines bandförmigen Materials wie Blech gefertigte Klemme (5) mit äusseren elastischen U-förmigen Zungen (10) zum Aufschieben auf einem Randbereich (6) eines Bauteils (2) und einem zwischen den Zungen sich befindenden mit einem Gewinde (7) versehenen Teil (17), und eine in dieses Gewinde (7) einschraubbare Schraube (8) besitzt, die zur Befestigung des zweiten Bauteils (3) am ersten Bauteil (2) dient, **dadurch gekennzeichnet, daß** die Schraube (8) eine für Schrauben für Kunststoff geeignete große Steigung (5) und einen entsprechend kleinen Flankenwinkel (α) besitzt, und daß das Gewinde (7) als aus dem mittleren Klemmenteil (17) ausgeschnittener und in Form einer Schnecke herausgezogener Bereich mit mehr als einem Gewindegang mit an die Steigung des Schraubengewindes angepaßter Steigung ausgebildet ist.

2. Vorrichtung nach Anspruch 1, **dadurch gekennzeichnet, daß** der mittlere, sich zwischen den zwei Klemmenzungen (10) befindende Teil (17) der Klemme als U-förmig gebogener Bereich ausgebildet ist, und jeder der zwei Schenkel (17,19) als Teil des Gewindes ausgebildet ist.

3. Vorrichtung nach Anspruch 2, **dadurch gekennzeichnet, daß** der auf dem Bauteil aufliegende Schenkel (17) der auf dieses Bauteil aufgeschobenen Klemme (5) einen Gewindegang (20) aufweist, der durch Ausschneiden und schneckenartiges Herausziehen aus dem Schenkel gebildet ist, und daß der andere Schenkel (19) den zusätzlichen Gewindeteil bildet.

4. Vorrichtung nach Anspruch 3, **dadurch gekennzeichnet, daß** der zusätzliche Gewindeteil (21) des Schenkels (19) einen Gewindegang bildet, der durch Auschneiden und schneckenartiges Herausziehen aus der Ebene des Schenkels gebildet ist.

5. Vorrichtung nach Anspruch 3, **dadurch gekennzeichnet, daß** der zweite Schenkel (19) von zwei parallelen Zungen (25) gebildet wird, deren Innenränder (26) zum Eingreifen in das Gewinde der Schraube (8) ausgebildet sind.

6. Vorrichtung nach Anspruch 5, **dadurch gekennzeichnet, daß** die in das Schraubengewinde eingreifenden Ränder (26) der Zunge als Reibsicherungen gegen selbsttätiges Lösen der Schraube z.B. aufgrund von Materialsetzen oder Vibrationen ausgebildet sind.

7. Vorrichtung nach Anspruch 6, **dadurch gekennzeichnet, daß** die Innenränder der Zunge (25) umgebogen und sich federnd an die Flanken des Schraubengewindes anlegbar ausgebildet sind.
